# FASCICULE DE BREVET EUROPEEN

(11) **EP 0 349 356 B1**
(45) Date de publication et mention de la délivrance du brevet: **16.06.1993**
(21) Numéro de dépôt: 89401137.8
(22) Date de dépôt: 21.04.1989
(51) Int. Cl.: B29C 47/20

(54) **Appareillage et procédé d'extrusion de tubes plastiques homogènes**
Vorrichtung und Verfahren zum Extrudieren von homogenen Rohren aus Kunststoff
Apparatus and method for extruding homogeneous plastic pipes

(30) Priorité: 04.05.1988 FR 8805999
(43) Date de publication de la demande: 03.01.1990
(73) Titulaire: ALPHACAN, F-78170 La Celle-Saint-Cloud (FR)
(72) Inventeur: Prevotat, Bernard, F-78150 Le Chesnay (FR)
(74) Mandataire: Foiret, Claude Serge

(56) Documents cités:
- EP-A- 0 118 692
- EP-A- 0 213 789
- EP-A- 0 255 043
- DE-A- 2 510 127
- DE-A- 3 026 822
- DE-A- 3 542 241
- FR-A- 2 354 188
- SU-A- 863 391
- US-A- 3 801 254
- SOVIET INVENTIONS ILLUSTRATED, 23 juin 1988, section 8829, résumé no. 88-203870/29, Derwent Publications Ltd, Londres, GB; & SU-A-1 362 646 (UKR PLASTIC RUBBER) 30-12-1987

## Description

La présente invention concerne un appareillage et un procédé pour l'extrusion de tubes plastiques homogènes.

On utilise couramment des tubes plastiques dans les canalisations en raison de leur légéreté, de leur facilité de pose et de raccordement et de leur résistance à la corrosion.

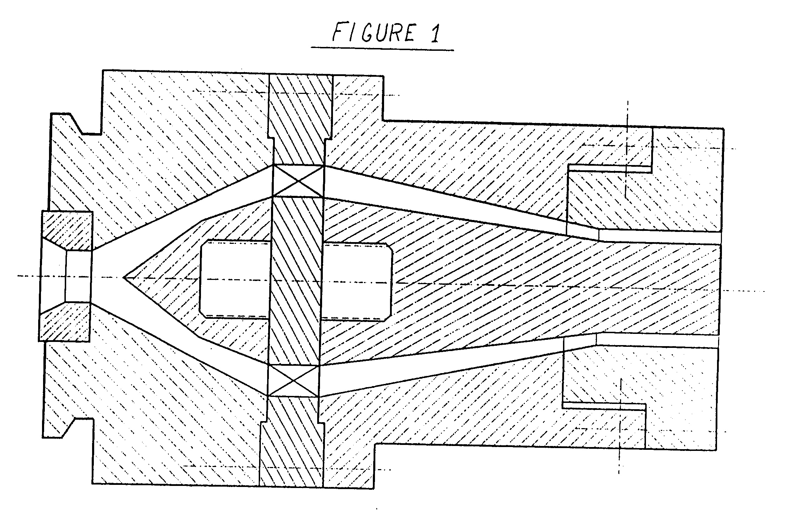

Ces tubes plastiques connus depuis plusieurs décennies sont toujours fabriqués selon le principe d'origine au moyen d'un appareillage illustré en Figure 1.

Cet appareillage ou tête d'extrusion, alimenté en matière plastique fondue par une extrudeuse à laquelle il est fixé dans l'axe d'extrusion, est formé de deux pièces principales entre lesquelles circule la matière fondue jusqu'à la sortie de la filière. La pièce centrale formant l'ébauche interne du tube comportant le poinçon et le mandrin, est constituée schématiquement de deux parties coniques unies l'une à l'autre dans leur plus grande base, le poinçon étant le cône divergent par rapport à la sortie d'extrudeuse et le mandrin étant la partie convergente vers la sortie de la filière. Ce mandrin est fixé au moyen d'ailettes à la pièce formant la partie externe de l'appareillage de façon à laisser un canal tubulaire libre entre les deux pièces de la sortie d'extrudeuse à la sortie de filière dudit appareillage.

Cet appareillage a peu évolué dans le temps, par contre les machines d'extrusion sur lesquelles il se raccorde sont de plus en plus performantes et présentent des débits de matière de plus en plus importants. Ceci conduit, malgré les soins des fabricants de ces matériels de fabrication de tubes, à des différences de températures notables dans la veine de matière plastique fondue issue de ces machines d'extrusion entraînant des différences de viscosité importantes de la matière plastique entre les différents points de l'appareillage. Ces variations de viscosité engendrent des fluctuations de débit et entrainent des écarts sensibles d'épaisseur sur le tube fini. Pour remédier à cet inconvénient, les constructeurs de matériel augmentent de plus en plus les volumes de matière contenus dans cet appareillage afin de diminuer ces écarts de températures.

C'est le cas par exemple pour l'appareillage décrit dans SOVIET INVENTIONS ILLUSTRATED du 23 Juin 1988, section 8829 résumé n° 88-203870/29 Derwent Publications Ltd. Londres GB ; SU-A-1362646 (UKR Plastic Rubber) 30.12.1987. Selon cet appareillage les flux de matière passent dans une tête de répartition constituée de deux canaux divergents alimentant chacun un canal hélicoïdal. Les canaux hélicoïdaux, convergeant l'un vers l'autre, se rejoignent avant l'outillage d'extrusion. Ce système de canaux hélicoïdaux ont également été développés dans les appareillages d'extrusion-soufflage de film comme par exemple dans le DE-A-3 542 241. Ces systèmes de canaux hélicoïdaux entraînent une stagnation de matière dans l'appareillage ce qui entraîne plus ou moins de surchauffe avec pour conséquence le manque d'homogénéïté d'épaisseur finale du tube.

Des appareillages dans lesquels les flux de matières passent dans une tête de répartition dont les canaux convergent l'un vers l'autre et se rencontrent avant l'outillage d'extrusion sont décrits, par exemple dans le DE-A-2510127, pour la fabrication de film ou de bouteilles par extrusion soufflage-injection. Dans ces types d'appareillages un certain volume destiné à recevoir la matière à injecter est développé par un système de piston.

Un autre système pour remédier à cet inconvénient consiste à corriger à la sortie de l'appareillage les écarts d'épaisseur par des systèmes divers de centrage automatique : soit par déplacement mécanique relatif du poinçon et mandrin par rapport à la filière, soit en créant des températures différentes à la périphérie de la filière. De tels systèmes de correction nécessitent des moyens élaborés de mesure en continu de l'épaisseur sur la circonférence du tube fini.

L'appareillage selon l'invention permet de régulariser en permanence la température de la matière issue de l'extrudeuse en faisant absorber à l'ensemble de la matière les variations de température locale dans la veine de matière. La température de la matière dans l'appareillage devenant naturellement homogène, tout moyen de centrage du tube fini devient inutile, en dehors bien entendu du réglage initial de la mise en route de la chaîne de production. Cet appareillage permet en outre d'améliorer les débits de la machine d'extrusion tout en réalisant un tube homogène dont les différences d'épaisseur de la paroi demeurent peu sensibles.

Comme pour les appareillages destinés à la fabrication de tubes multicouches, l'appareillage selon l'invention, alimenté par une extrudeuse, possède en sortie de cette dernière une tête de répartition. Cette tête de répartition, à priori inutile dans la fabrication de tube homogène puisqu'elle sert dans la fabrication des tubes multicouches à réunir des flux de matière de compositions différentes, permet, comme on le voit dans la suite, de faire absorber à l'ensemble de la matière plastique fondue les variations de températures locales dûes à l'extrudeuse.

L'appareillage est composé d'une tête de répartition, possédant des moyens de chauffage et de régulation, permettant de diviser en deux flux le flux principal sortant de l'extrudeuse. Chacun de ces flux alimente un canal annulaire. La veine de matière à l'état fondu est ainsi divisée dans deux canaux tubulaires qui peuvent se rejoindre dans l'appareillage mais de préférence se rejoignent sensiblement au niveau de l'outillage d'extrusion constitué du mandrin et de la filière. On comprend l'intérêt d'un tel appareillage quand on sait que selon l'appareillage de l'art antérieur une différence de température dans la veine de matière fondue sortant de l'extrudeuse va se transmettre axialement dans tout l'appareillage d'extrusion, à défaut de moyens de compensation extérieurs, jusqu'à la sortie de filière avec pour conséquence les inconvénients signalés. Selon l'appareillage de l'invention la perturbation de température dans la veine est supprimée. Du fait de la division en deux du flux, la différence de température va d'abord se transmettre axialement dans un des flux, mais va être déviée radialement quand la matière entre dans un des deux canaux annulaires. En outre cette différence de température va influencer effectivement la répartition de chacun des flux, mais comme cette répartition se fait annulairement, les deux flux se trouvent en opposition et les fluctuations de température se trouvent annulées au point de rencontre des deux canaux tubulaires. Enfin les anomalies de température sont préalablement sensiblement atténuées du fait de la division en deux de la veine qui permet d'augmenter sensiblement la surface d'étalement de la matière fondue dans l'appareillage.

De façon simplifiée cet appareillage est caractérisé en ce que l'alimentation en matière en provenance de l'extrudeuse est divisée dans une tête de répartition en deux alimentations de deux canaux annulaires indépendants se rejoignant de préférence au niveau de l'outillage d'extrusion. Les deux alimentations sont calculées de façon à permettre la circulation de deux flux de débits sensiblement équivalents et sont dirigées de préférence sensiblement en opposition vers l'extérieur.

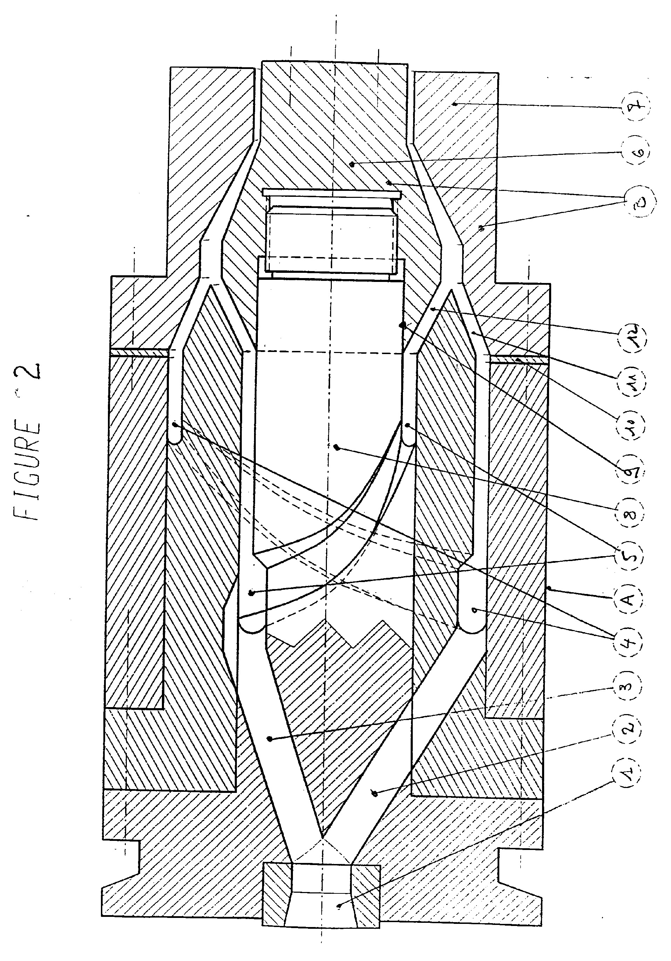

La Figure 2 annexée permet de mieux comprendre l'invention. Cette Figure détaille et illustre une coupe d'un type d'appareillage. Cet appareillage est constitué de l'ensemble tête de répartition (A) et outillage d'extrusion (B). La tête de répartition comprend un canal d'alimentation (1) relié à la sortie d'une extrudeuse non représentée disposée de préférence sensiblement dans l'axe de l'outillage, ledit canal est divisé en deux canaux sensiblement divergents (2), (3) d'alimentation de deux canaux annulaires (4), (5) convergeant l'un vers l'autre jusqu'à un point de rencontre situé de préférence sensiblement au niveau de l'outillage d'extrusion. L'outillage d'extrusion est connu s'agissant d'un système mandrin (6)-filière (7) classique.

En fait, selon l'invention, il s'agit d'un appareillage pour la fabrication par extrusion de tubes plastiques monocouches homogènes constitué d'un ensemble tête de répartition (A) et outillage d'extrusion (B) formé d'un mandrin (6) et d'une filière (7), la tête de répartition comprenant un canal d'alimentation (1) relié à la sortie d'une extrudeuse, ledit canal étant divisé en deux canaux sensiblement divergents (2) (3) d'alimentation de deux canaux annulaires (4) (5) convergeant l'un vers l'autre jusqu'à un point de rencontre situé dans l'outillage d'extrusion (B) de l'appareillage caractérisé en ce que les deux canaux d'alimentation divergents (2) (3), calculés de façon à permettre la circulation de deux flux de débits sensiblement équivalents sont dirigés sensiblement en opposition vers l'extérieur de l'appareillage.

Un autre avantage de l'appareillage est la suppression des ailettes de support de la pièce centrale de l'art antérieur constituée du poinçon et du mandrin. Selon l'invention les canaux annulaires ne sont pas en contact direct avec le canal de sortie de l'extrudeuse mais réunis à ce canal par l'intermédiaire de deux canaux divergents. Ce type de disposition permet de fixer la pièce centrale (8) maintenant également le mandrin de l'outillage d'extrusion, directement à la partie externe de l'appareillage sans l'intervention d'ailettes.

Des moyens (9)(10) d'épaisseur réglable permettant d'éloigner plus ou moins le mandrin de la pièce centrale servent à augmenter ou à diminuer le volume des canaux annulaires dans leurs zones de convergence (11)(12). Cette intervention sur le volume de ces canaux influence le réglage des flux de matière dans les canaux divergents (2)(3).

L'appareillage selon l'invention permet la fabrication de tubes monocouches homogènes de très bon aspect possédant d'excellentes caractéristiques mécaniques et présentant sensiblement peu d'écarts d'épaisseur sur la paroi. Cette régularité d'épaisseur de la paroi de tubes est obtenue sans qu'il soit nécessaire de recentrer l'outillage d'extrusion en fonction des variations de température dans la veine d'entrée de matière plastique fondue.

Plus particulièrement le procédé de fabrication de tube homogène consiste :
- à alimenter en matière plastique fondue, au moyen d'une extrudeuse, une tête de répartition (A) comprenant un canal d'alimentation (1) relié à la sortie de l'extrudeuse, ledit canal divisé en deux canaux divergents (2)(3) permet le passage de la matière plastique à l'état fondu dans deux canaux annulaires (4)(5) superposés convergeant l'un vers l'autre jusqu'à un point de rencontre situé dans l'appareillage de préférence sensiblement au niveau de l'outillage d'extrusion
- a réunir les deux flux de matière plastique audit point de rencontre, de préférence entre le mandrin (6) et la filière (7) de l'outillage d'extrusion.

Comme pour un procédé d'extrusion classique l'appareillage est maintenu à la température convenable pour la transformation de la matière plastique employée.

Selon le procédé, outre la régularité d'épaisseur, le tube obtenu est parfaitement homogène. Contrairement à ce qu'on aurait pu attendre, la réunion de matière en sortie des deux canaux annulaires n'est absolument pas marquée dans le tube final. Il y a cohésion complète des deux flux lors du passage dans l'outillage d'extrusion.

Au moyen de l'appareillage et du procédé, dans les conditions d'extrusion propres à chaque matière plastique considérée, on peut réaliser tout type de tube plastique connu.

## Revendications

1. Appareillage pour la fabrication par extrusion de tubes plastiques monocouches homogènes constitué d'un ensemble tête de répartition (A) et outillage d'extrusion (B) formé d'un mandrin (6) et d'une filière (7), la tête de répartition comprenant un canal d'alimentation (1) relié à la sortie d'une extrudeuse, ledit canal étant divisé en deux canaux sensiblement divergents (2)(3) d'alimentation de deux canaux annulaires (4)(5) convergeant l'un vers l'autre jusqu'à un point de rencontre situé dans l'outillage d'extrusion (B) de l'appareillage caractérisé en ce que les deux canaux d'alimentation divergents (2)(3), calculés de façon à permettre la circulation de deux flux de débits sensiblement équivalents sont dirigés sensiblement en opposition vers l'extérieur de l'appareillage.

2. Appareillage selon la revendication 1 caractérisé en ce que des moyens (9) (10) de réglage d'épaisseur permettent d'éloigner plus ou moins le mandrin (6) de la pièce centrale (8).

## Patentansprüche

1. Vorrichtung zur Herstellung einschichtiger, homogener Kunststoffrohre durch Extrusion, bestehend aus einer Einheit von Verteilerkopf (A) und Extrusionswerkzeug (B), das aus einem Dorn (6) und einem Spritzmundstück (7) gebildet ist, wobei der Verteilerkopf einen Düsenkanal (1) enthält, der mit dem Ausgang des Extruders verbunden ist und der Düsenkanal in zwei deutlich auseinandergehende Kanäle (2) (3) zur Versorgung von Ringkanälen (4) (5) aufgeteilt ist, die bis zu einem Treffpunkt im Extrusionswerkzeug (B) der Vorrichtung zusammenlaufen, dadurch gekennzeichnet, daß die beiden auseinandergehenden Düsenkanäle (2) (3), die so berechnet sind, daß der Durchfluß der etwa gleichen Mengen gewährleistet ist, ungefähr gegenläufig zum Ausgang der Vorrichtung geführt werden.

2. Vorrichtung nach Anspruch 1, dadurch gekennzeichnet, daß mittels der Dickenregler (9) (10) der Dorn (6) mehr oder weniger vom Mittelstück (8) entfernt werden kann.

## Claims

1. Apparatus for forming homogeneous monolayer plastics tubes by extrusion, comprising an assembly which consists of a distribution head (A) and an extrusion tool (B) comprising a mandrel (6) and a die (7), the distribution head comprising a feed duct (1) connected to the output of an extruder, the said duct being divided into two substantially divergent ducts (2) (3) for feeding two annular ducts (4) (5) that converge towards each other as far as a junction point situated in the extrusion tool (B) of the apparatus, characterised in that the two divergent feed ducts (2) (3), which are so designed as to enable two streams to flow at substantially equivalent flow rates, are directed substantially in opposition towards the outside of the apparatus.

2. Apparatus according to Claim 1, characterised in that means (9) (10) for regulating thickness enable the distance of the mandrel (6) from the central member (8) to be increased or decreased.
